# EUROPEAN PATENT SPECIFICATION

(11) **EP 4 106 157 B1**
(45) Date of publication and mention of the grant of the patent: **06.08.2025**
(21) Application number: 21771780.0
(22) Date of filing: 09.03.2021
(51) Int. Cl.: H02K 9/19, H02K 3/24, H02K 5/20

(54) **ROTARY MACHINE**
ROTATIONSMASCHINE
MACHINE ROTATIVE

(30) Priority: 19.03.2020 JP 2020048836
(43) Date of publication of application: 21.12.2022
(73) Proprietor: Meidensha Corporation, Tokyo 141-6029 (JP)
(72) Inventor: UEMATSU, Taku, Tokyo 141-6029 (JP); MASHIKO, Hiromasa, Tokyo 141-6029 (JP)
(74) Representative: Manitz Finsterwald Patent- und Rechtsanwaltspartnerschaft mbB
(86) International application number: PCT/JP2021/009177
(87) International publication number: WO 2021/187221

(56) References cited:
- CN-A- 103 532 307
- JP-A- 2004 180 376
- JP-A- 2006 005 984
- JP-A- 2006 006 047
- JP-A- 2010 259 145
- JP-A- 2014 225 969
- KR-A- 20200 007 293
- US-A1- 2012 062 055

## Description

### Technical Field

The present invention relates to rotary machines.

### Background Art

Rotary machines generate heat by being driven, and degradation in efficiency or the like may occur. Hence, cooling is desired. For example, in order to cool a coil end of a stator, cooling oil is made to flow to the coil end.

In Patent Literature 1, a frame that accommodates a stator and brackets joined to both end surfaces in an axial direction of the frame are provided, and grooves through which the cooling oil is made to flow are formed on at least one of mating surfaces of the frame and the brackets. The grooves open toward the coil end either above or beside the coil end, and the cooling oil that has flowed from openings flows to the coil end.

### Citation List

### Patent Literature

Patent Literature 1: JP 4441338 B2

### Summary of Invention

### Technical Problem

In Patent Literature 1, it is configured that the cooling oil is made to flow to the coil end from either above or beside the coil end, and the oil that has passed through an upper-side coil end flows down to a lower-side coil end. For this reason, the temperature of the oil that has reached the lower-side coil end is increased, and sufficient cooling is not enabled, and there is room for improvement in cooling performance.

An object of the present invention is to provide a rotary machine with improved cooling performance.

### Solution to Problem

A rotary machine according to one aspect of the present invention includes: a stator including a stator core and a coil wound around the stator core; a rotor disposed to face the stator via an air gap; a frame that covers the stator from an outer side in a radial direction; and a first bracket that covers one side in an axial direction of the frame, in which the coil includes a first coil end that protrudes on the one side in the axial direction of the stator core, the frame includes a first flow passage that penetrates from an inlet on the outer side in the radial direction to a first opening on the one side in the axial direction, either or both the frame and the first bracket include a second flow passage on a mating surface between the frame and the first bracket, the second flow passage being connected with the first opening and located on the outer side in the radial direction of the first coil end, and the second flow passage includes a third flow passage and a fourth flow passage, the third flow passage being disposed over a circumferential direction, the fourth flow passage being disposed at a plurality of places in the circumferential direction including at least a lower side in a vertical direction of the first coil end, being connected with the third flow passage, and penetrating toward the first coil end, and the fourth flow passage is a flow passage for causing a cooling medium that has flowed from the inlet to jet toward the first coil end.

The rotary machine according the above one aspect may further include a second bracket that covers the other side in the axial direction of the frame, in which the coil may include a second coil end that protrudes on the other side in the axial direction of the stator core, the first flow passage penetrates from the first opening to a second opening on the other side in the axial direction, either or both the frame and the second bracket may include a fifth flow passage on a mating surface between the frame and the second bracket, the fifth flow passage being connected with the first opening and located on the outer side in the radial direction of the second coil end, and the fifth flow passage may include a sixth flow passage and a seventh flow passage, the sixth flow passage being disposed over the circumferential direction, the seventh flow passage being disposed at a plurality of places in the circumferential direction including at least a lower side in the vertical direction of the second coil end, being connected with the sixth flow passage, and penetrating toward the second coil end, and the seventh flow passage is a flow passage for causing the cooling medium that has flowed from the inlet to jet toward the second coil end.

In the rotary machine according the above one aspect, the second flow passage may be formed by a first groove recessed on the other side in the axial direction provided on a surface of the frame facing the first bracket, and a surface of the first bracket facing the first groove, and the fifth flow passage may be formed by a second groove recessed on one side in the axial direction provided on a surface of the frame facing the second bracket, and a surface of the second bracket facing the second groove.

In the rotary machine according the above one aspect, the first opening may be located on an upper side in the vertical direction of the first coil end, and the second opening may be located on an upper side in the vertical direction of the second coil end.

### Advantageous Effects of Invention

According to one aspect of the present invention, a rotary machine with improved cooling performance can be provided.

### Brief Description of Drawings

Fig. 1 is a perspective view of a rotary machine according to a first embodiment of the present invention.
Fig. 2 is a side cross-sectional view illustrating a motor 10 of Fig. 1 cut along a plane orthogonal to Z axis and passing through a central axis J.
Fig. 3 is a perspective view illustrating the motor 10 of Fig. 1 from which a bracket 15 is removed.
Fig. 4 is a perspective view illustrating the motor 10 of Fig. 1 from which a bracket 14 is removed.

### Description of Embodiments

Hereinafter, embodiments of the present invention will be described with reference to the drawings. In the embodiments, in order to facilitate understanding, structures and elements other than the main parts of the present invention will be described in a simplified or omitted manner. In addition, in the drawings, the same elements are denoted by the same reference numerals. Note that the shapes, dimensions, and the like of the respective elements illustrated in the drawings are schematically illustrated, and do not indicate actual shapes, dimensions, or the like.

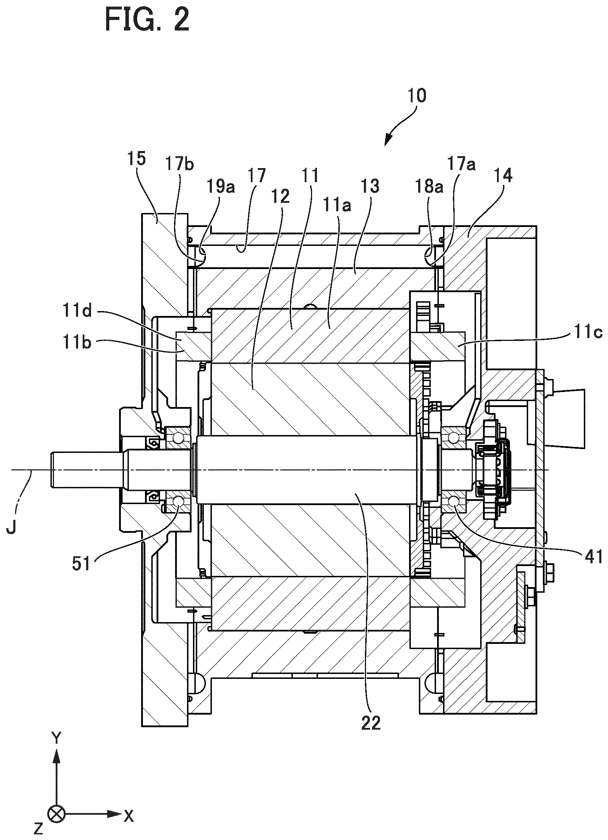

Note that in the following description, a direction in which the central axis J illustrated in Fig. 2 extends will be simply referred to as an "axial direction", a radial direction centered on the central axis J will be simply referred to as a "radial direction", and a circumferential direction centered on the central axis J will be simply referred to as a "circumferential direction". In addition, in the axial direction, the right side in Fig. 2 will be referred to as one side, and the left side in Fig. 2 will be referred to as the other side. Further, in the radial direction, a side close to the central axis J will be referred to as an inner side, and a side far from the central axis J will be referred to as an outer side.

Further, in the drawings, an XYZ coordinate system will be illustrated as a three-dimensional orthogonal coordinate system, as needed. In the XYZ coordinate system, an X-axis direction is a direction parallel to the central axis J, and is a left-right direction of the side cross-sectional view illustrated in Fig. 2. A Y-axis direction is a direction orthogonal to the X-axis direction, and is an up-down direction in the side cross-sectional view illustrated in Fig. 2. A Z-axis direction is a direction orthogonal to the X-axis direction and the Y-axis direction. In any of the X-axis direction, the Y-axis direction, and the Z-axis direction, + side denotes a side on which an arrow illustrated in the drawing points, and - side denotes an opposite side.

In addition, in the following description, extending or spreading in the axial direction includes not only a case of strictly extending or spreading in the axial direction (X-axis direction) but also a case of extending or spreading in a direction inclined within a range smaller than 45° with respect to the axial direction. In addition, in the following description, extending or spreading in the radial direction includes not only a case of strictly extending or spreading in the radial direction, that is, the axial direction (X-axis direction) but also a case of extending or spreading in a direction inclined within a range smaller than 45° with respect to the radial direction.

### <First Embodiment>

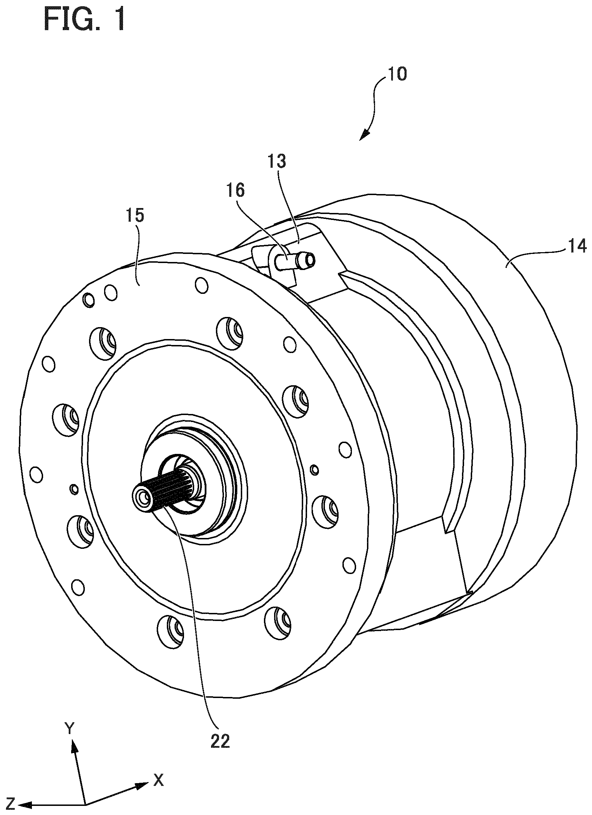

Fig. 1 is a perspective view of a motor according to a first embodiment of the present invention. Fig. 2 is a side cross-sectional view illustrating a motor 10 of Fig. 1 cut along a plane orthogonal to Z axis and passing through a central axis J. In the present embodiment, a motor as an example of a rotary machine will be described. The motor 10 is an example of the rotary machine.

The motor 10 includes a stator 11, a rotor 12, a frame 13, a bracket 14, and a bracket 15. The stator 11 includes a stator core 11a, and a coil 11b wound around the stator core 11a. The coil 11b includes a coil end 11c, which protrudes on one side in the axial direction of the stator core 11a, and a coil end 11d, which protrudes on the other side in the axial direction of the stator core 11a. The rotor 12 is disposed to face the stator 11 via an air gap. The rotor 12 is disposed on the inner side in the radial direction of the stator 11. The rotor 12 includes a shaft 22 disposed along the central axis J. The rotor 12 rotates about the shaft 22 as a rotation axis.

The frame 13 covers the stator 11 from an outer side in the radial direction. The frame 13 is, for example, aluminum die-cast. The bracket 14 covers one side in the axial direction of the frame 13. The bracket 14 covers an opening on one side in the axial direction of the frame 13 so as to close the opening. The bracket 15 covers the other side in the axial direction of the frame 13. The bracket 15 covers an opening on the other side in the axial direction of the frame 13 so as to close the opening. The shaft 22 penetrates the bracket 15.

The motor 10 includes a bearing 41, which pivotally supports the shaft 22 on one side in the axial direction, and a bearing 51, which pivotally supports the shaft 22 on the other side in the axial direction. The bracket 14 fixes the bearing 41. The bracket 15 fixes the bearing 51. The bearing 41 and the bearing 51 pivotally support the shaft 22 such that the rotor 12 is rotatable about the central axis J as a rotation axis.

The frame 13 includes an inlet 16 on the outer side in the radial direction. The inlet 16 is an inlet for the cooling oil. The cooling oil is an example of a cooling medium. Other known cooling media may be used instead of the cooling oil. The motor 10 causes the cooling oil to flow into the frame 13 from the inlet 16 by, for example, a pump. The frame 13 includes a flow passage 17, which penetrates from the inlet 16 to the opening 17a on one side in the axial direction. The opening 17a is an opening connected with the flow passage 17. The frame 13 includes the flow passage 17, which penetrates from the inlet 16 to an opening 17b on the other side in the axial direction. The opening 17b is an opening connected with the flow passage 17. The flow passage 17 penetrates from the opening 17a to the opening 17b. The cooling oil that has flowed from the inlet 16 flows toward both the opening 17a and the opening 17b.

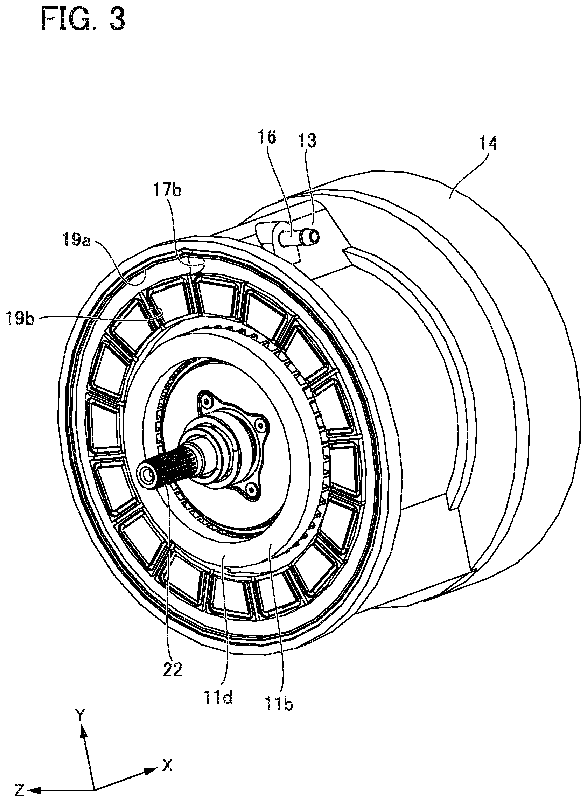

Fig. 3 is a perspective view illustrating the motor 10 of Fig. 1, from which the bracket 15 is removed. By removing the bracket 15 from the motor 10, the coil end 11d on the other side in the axial direction of the stator 11 can be seen. Note that in Fig. 3, the coil end 11d is simplified for ease of viewing.

The frame 13 includes flow passages 19a and 19b on mating surfaces of the frame 13 and the bracket 15. The flow passage 19a is connected with the opening 17b. The opening 17b is located on an upper side in a vertical direction of the coil end 11d. The flow passages 19a and 19b are located on an outer side in the radial direction of the coil end 11d. The flow passage 19a is disposed over the entire circumference in a circumferential direction. The flow passages 19b are respectively disposed at a plurality of places in the circumferential direction including at least a lower side in the vertical direction of the coil end 11d, are connected with the flow passage 19a, and penetrate toward the coil end 11d.

The flow passages 19a and 19b formed by grooves recessed on one side in the axial direction provided on the surface of the frame 13 facing the bracket 15, and the surface of the bracket 15 facing such grooves. The flow passages 19a and 19b may be formed by grooves recessed on one side in the axial direction provided on the surface of the frame 13 facing the bracket 15, and grooves recessed on the other side in the axial direction provided on the surface of the bracket 15 facing such grooves. The flow passages 19a and 19b may be formed by grooves recessed on the other side in the axial direction provided on the surface of the bracket 15 facing the frame 13, and the surface of the frame 13 facing such grooves.

In the present embodiment, 16 flow passages 19b are disposed at equal intervals in the circumferential direction. The cooling oil that has flowed from the inlet 16 is jetted from each of the plurality of flow passages 19b through the flow passage 17 and the flow passage 19a toward the coil end 11d.

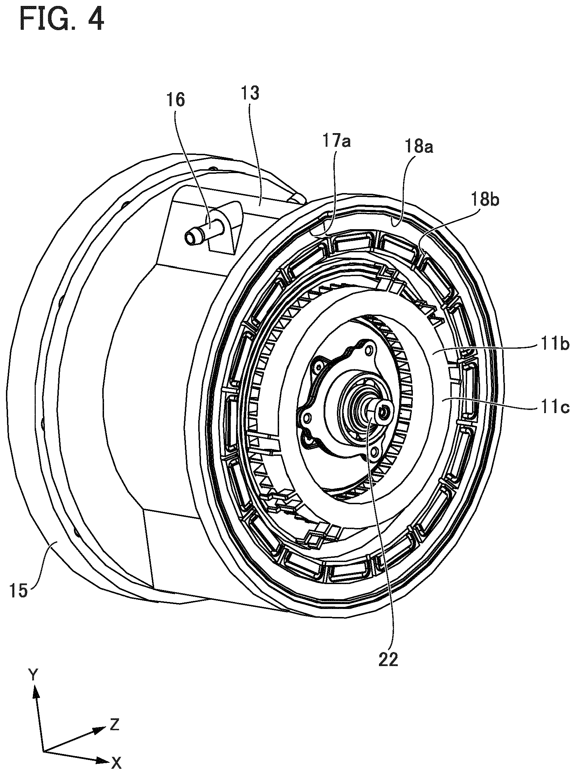

Fig. 4 is a perspective view illustrating the motor 10 of Fig. 1, from which the bracket 14 is removed. By removing the bracket 14 from the motor 10, the coil end 11c on the other side in the axial direction of the stator 11 can be seen. Note that in Fig. 3, the coil end 11c is simplified for ease of viewing.

The frame 13 includes flow passages 18a and 18b on mating surfaces of the frame 13 and the bracket 14. The flow passage 18a is connected with the opening 17a. The opening 17a is located on an upper side in the vertical direction of the coil end 11c. The flow passages 18a and 18b are located on an outer side in the radial direction of the coil end 11c. The flow passage 18a is disposed over the entire circumference in the circumferential direction. The flow passages 18b are respectively disposed at a plurality of places in the circumferential direction including at least a lower side in the vertical direction of the coil end 11c, are connected with the flow passage 18a, and penetrate toward the coil end 11c.

The flow passages 18a and 18b formed by grooves recessed on the other side in the axial direction provided on the surface of the frame 13 facing the bracket 14, and the surface of the bracket 14 facing such grooves. The flow passages 18a and 18b may be formed by grooves recessed on the other side in the axial direction provided on the surface of the frame 13 facing the bracket 14, and grooves recessed on one side in the axial direction provided on the surface of the bracket 14 facing such grooves. The flow passages 18a and 18b may be formed by grooves recessed on one side in the axial direction provided on the surface of the bracket 14 facing the frame 13, and the surface of the frame 13 facing such grooves.

In the present embodiment, 16 flow passages 18b are disposed at equal intervals in the circumferential direction. The cooling oil that has flowed from the inlet 16 is jetted from each of the plurality of flow passages 18b through the flow passage 17 and the flow passage 18a toward the coil end 11c.

According to the present embodiment, the oil passages (flow passages 18a, 18b, 19a, and 19b) are provided on the surfaces where the frame 13 faces the brackets 14 and 15. Therefore, this eliminates the need for providing a separate component part such as an oil guide for the oil passage, and does not increase the manufacturing process.

In addition, the oil jetted to the coil end on a lower side is not the oil having the temperature that has been increased, while flowing through the coil end on an upper side. Therefore, the coil end on a lower side can also be cooled in a sufficient manner, and the cooling performance can be improved.

Further, a first oil passage (flow passages 18a and 19a) is disposed on an outer side in the radial direction of the coil ends 11c and 11d, and the plurality of second oil passages (flow passages 18b and 19b) are disposed in the circumferential direction from the first oil passage toward the coil ends 11c and 11d. Therefore, the oil can be jetted from a plurality of places in the circumferential direction toward the coil ends 11c and 11d, and the coil ends 11c and 11d can be cooled in an efficient manner.

According to the present embodiment, the first oil passage (flow passages 18a and 19a) and the second oil passage (flow passage 18b and 19b) are formed by the grooves provided on the surfaces of the frame 13 respectively facing the brackets 14 and 15. Therefore, this enables the oil passages (flow passages 18a, 18b, 19a, and 19b) to be formed easily, eliminates the need for providing a separate component part such as an oil guide for the oil passage, and does not increase the manufacturing process.

According to the present embodiment, oil can be supplied to the oil passages (flow passages 18a, 18b, 19a, and 19b) from the outside of the frame 13, and the coil ends 11c and 11d can be cooled in an efficient manner.

According to the present embodiment, the connection point between the flow passage 17 and the flow passages 18a and 19a is located on an upper side in the vertical direction of the coil ends 11c and 11d. Thus, the oil that has flowed into the flow passages 18a and 19a from the flow passage 17 reaches a lower side in the vertical direction of the flow passages 18a and 19a by its own weight, and the lower side in the vertical direction of the coil ends 11c and 11d can be cooled in an efficient manner.

The present invention is not limited to the above embodiments, and various improvements and design changes may be made without departing from the gist of the present invention. In addition, the embodiments disclosed herein are to be considered in all respects as illustrative and non-limiting ones. The scope of the present invention is indicated not by the above description but by the scope of claims, and it is intended that meanings equivalent to the claims and all modifications within the scope are included.

The present application claims priority based on Japanese Patent Application No. 2020-048836 filed on March 19, 2020, the entire contents of which are incorporated herein by reference.

### Reference Signs List

- 10: Motor
- 11: Stator
- 13: Frame
- 22: Shaft

## Claims

1. A rotary machine comprising:
a stator (11) including a stator core (11a) and a coil (11b) wound around the stator core (11a);
a rotor (12) disposed to face the stator (11) via an air gap;
a frame (13) that covers the stator (11) from an outer side in a radial direction; and
a first bracket (14) that covers one side in an axial direction of the frame (13), wherein
the coil (11b) includes a first coil end (11c) that protrudes on the one side in the axial direction of the stator core (11a),
the frame (13) includes a first flow passage (17) that penetrates from an inlet (16) on the outer side in the radial direction to a first opening (17a) on the one side in the axial direction,
either or both the frame (13) and the first bracket (14) include a second flow passage (18a,b) on a mating surface between the frame (13) and the first bracket (14), the second flow passage (18a,b) being connected with the first opening (17a) and located on the outer side in the radial direction of the first coil end (11c), and
the second flow passage (18a,b) includes a third flow passage (18a) and a fourth flow passage (18b), the third flow passage (18a) being disposed over a circumferential direction, the fourth flow passage (18b) being disposed at a plurality of places in the circumferential direction including at least a lower side in a vertical direction of the first coil end (11c), being connected with the third flow passage (18a), and penetrating toward the first coil end (11c), and the fourth flow passage (18b) is a flow passage for causing a cooling medium that has flowed from the inlet (16) to jet toward the first coil end (11c).

2. The rotary machine according to claim 1, further comprising a second bracket (15) that covers the other side in the axial direction of the frame (13), wherein
the coil (11b) includes a second coil end (11d) that protrudes on the other side in the axial direction of the stator core (11a),
the first flow passage (17) penetrates from the first opening (17a) to a second opening (17b) on the other side in the axial direction,
either or both the frame (13) and the second bracket (15) include a fifth flow passage (19a,b) on a mating surface between the frame (13) and the second bracket (15), the fifth flow passage (19a,b) being connected with the first opening (17a) and located on the outer side in the radial direction of the second coil end (11d), and
the fifth flow passage (19a,b) includes a sixth flow passage (19a) and a seventh flow passage (19b), the sixth flow passage (19a) being disposed over the circumferential direction, the seventh flow passage (19b) being disposed at a plurality of places in the circumferential direction including at least a lower side in the vertical direction of the second coil end (11d), being connected with the sixth flow passage (19a), and penetrating toward the second coil end (11d), and the seventh flow passage (19b) is a flow passage for causing the cooling medium that has flowed from the inlet (16) to jet toward the second coil end (11d).

3. The rotary machine according to claim 2, wherein
the second flow passage (18a,b) is formed by a first groove recessed on the other side in the axial direction provided on a surface of the frame (13) facing the first bracket (14), and a surface of the first bracket (14) facing the first groove, and
the fifth flow passage (19a,b) is formed by a second groove recessed on the one side in the axial direction provided on a surface of the frame (13) facing the second bracket (15), and a surface of the second bracket (15) facing the second groove.

4. The rotary machine according to claim 2 or 3, wherein
the first opening (17a) is located on an upper side in the vertical direction of the first coil end (11c), and
the second opening (17b) is located on an upper side in the vertical direction of the second coil end (11d).

## Patentansprüche

1. Rotationsmaschine, umfassend:
einen Stator (11), der einen Statorkern (11a) und eine um den Statorkern (11a) gewickelte Spule (11b) umfasst;
einen Rotor (12), der so angeordnet ist, dass er dem Stator (11) über einen Luftspalt zugewandt ist;
einen Rahmen (13), der den Stator (11) von einer Außenseite in radialer Richtung abdeckt; und
eine erste Halterung (14), die eine Seite in axialer Richtung des Rahmens (13) abdeckt, wobei
die Spule (11b) ein erstes Spulenende (11c) umfasst, das auf der einen Seite in axialer Richtung des Statorkerns (11a) vorspringt,
der Rahmen (13) einen ersten Strömungsdurchgang (17) umfasst, der von einem Einlass (16) an der Außenseite in radialer Richtung zu einer ersten Öffnung (17a) auf der einen Seite in axialer Richtung führt,
der Rahmen (13) und/oder die erste Halterung (14) einen zweiten Strömungsdurchgang (18a, b) an einer Passfläche zwischen dem Rahmen (13) und der ersten Halterung (14) umfassen, wobei der zweite Strömungsdurchgang (18a, b) mit der ersten Öffnung (17a) verbunden ist und an der Außenseite in radialer Richtung des ersten Spulenendes (11c) angeordnet ist, und
der zweite Strömungsdurchgang (18a, b) einen dritten Strömungsdurchgang (18a) und einen vierten Strömungsdurchgang (18b) umfasst, wobei der dritte Strömungsdurchgang (18a) über eine Umfangsrichtung angeordnet ist, der vierte Strömungsdurchgang (18b) an einer Vielzahl von Stellen in Umfangsrichtung angeordnet ist und zumindest eine untere Seite in vertikaler Richtung des ersten Spulenendes (11c) umfasst, mit dem dritten Strömungsdurchgang (18a) verbunden ist und in Richtung des ersten Spulenendes (11c) führt, und der vierte Strömungsdurchgang (18b) ein Strömungsdurchgang ist, der bewirkt, dass ein Kühlmedium, das von dem Einlass (16) geströmt ist, in Richtung des ersten Spulenendes (11c) ausströmt.

2. Rotationsmaschine nach Anspruch 1, ferner umfassend eine zweite Halterung (15), die die andere Seite in axialer Richtung des Rahmens (13) abdeckt, wobei
die Spule (11b) ein zweites Spulenende (11d) umfasst, das auf der anderen Seite in axialer Richtung des Statorkerns (11a) vorspringt,
der erste Strömungsdurchgang (17) von der ersten Öffnung (17a) zu einer zweiten Öffnung (17b) auf der anderen Seite in axialer Richtung führt,
der Rahmen (13) und/oder die zweite Halterung (15) einen fünften Strömungsdurchgang (19a, b) an einer Passfläche zwischen dem Rahmen (13) und der zweiten Halterung (15) umfassen, wobei der fünfte Strömungsdurchgang (19a, b) mit der ersten Öffnung (17a) verbunden ist und an der Außenseite in radialer Richtung des zweiten Spulenendes (11d) angeordnet ist, und
der fünfte Strömungsdurchgang (19a, b) einen sechsten Strömungsdurchgang (19a) und einen siebten Strömungsdurchgang (19b) umfasst, wobei der sechste Strömungsdurchgang (19a) über die Umfangsrichtung angeordnet ist, der siebte Strömungsdurchgang (19b) an einer Vielzahl von Stellen in Umfangsrichtung angeordnet ist und zumindest eine untere Seite in vertikaler Richtung des zweiten Spulenendes (11d) umfasst, mit dem sechsten Strömungsdurchgang (19a) verbunden ist und in Richtung des zweiten Spulenendes (11d) führt, und der siebte Strömungsdurchgang (19b) ein Strömungsdurchgang ist, der bewirkt, dass das Kühlmedium, das von dem Einlass (16) geströmt ist, in Richtung des zweiten Spulenendes (11d) ausströmt.

3. Rotationsmaschine nach Anspruch 2, wobei
der zweite Strömungsdurchgang (18a, b) durch eine erste Nut gebildet ist, die an der anderen Seite in axialer Richtung ausgespart ist und an einer Fläche des Rahmens (13) vorgesehen ist, die der ersten Halterung (14) zugewandt ist, wobei eine Fläche der ersten Halterung (14) der ersten Nut zugewandt ist, und
der fünfte Strömungsdurchgang (19a, b) durch eine zweite Nut gebildet ist, die an der einen Seite in axialer Richtung ausgespart ist und an einer Fläche des Rahmens (13) vorgesehen ist, die der zweiten Halterung (15) zugewandt ist, wobei eine Fläche der zweiten Halterung (15) der zweiten Nut zugewandt ist.

4. Rotationsmaschine nach Anspruch 2 oder 3, wobei
die erste Öffnung (17a) an einer Oberseite in vertikaler Richtung des ersten Spulenendes (11c) angeordnet ist, und
die zweite Öffnung (17b) an einer Oberseite in vertikaler Richtung des zweiten Spulenendes (11d) angeordnet ist.

## Revendications

1. Machine rotative comprenant :
un stator (11) comportant un noyau de stator (11a) et une bobine (11b) enroulée autour du noyau de stator (11a) ;
un rotor (12) disposé de manière à faire face au stator (11) via un entrefer ; une carcasse (15) qui recouvre le stator (11) depuis un côté extérieur dans une direction radiale ; et
un premier support (14) qui recouvre un côté dans une direction axiale de la carcasse (13), dans laquelle
la bobine (11b) comporte une première extrémité de bobine (11c) qui fait saillie d'un côté dans la direction axiale du noyau de stator (11a),
la carcasse (13) comporte un premier passage d'écoulement (17) qui pénètre à partir d'une entrée (16) du côté extérieur dans la direction radiale jusqu'à une première ouverture (17a) du côté dans la direction axiale,
soit l'un ou l'autre parmi la carcasse (13) et le premier support (14), soit les deux, comportent un deuxième passage d'écoulement (18a,b) sur une surface d'appariement entre la carcasse (13) et le premier support (14), le deuxième passage d'écoulement (18a,b) étant relié à la première ouverture (17a) et situé du côté extérieur dans la direction radiale de la première extrémité de bobine (11c), et
le deuxième passage d'écoulement (18a,b) comporte un troisième passage d'écoulement (18a) et un quatrième passage d'écoulement (18b), le troisième passage d'écoulement (18a) étant disposé sur une direction circonférentielle, le quatrième passage d'écoulement (18b) étant disposé à une pluralité d'endroits dans la direction circonférentielle comportant au moins un côté inférieur dans une direction verticale de la première extrémité de bobine (11c), étant relié au troisième passage d'écoulement (18a) et pénétrant vers la première extrémité de bobine (11c), et le quatrième passage d'écoulement (18b) est un passage d'écoulement destiné à amener un milieu de refroidissement qui s'est écoulé à partir de l'entrée (16) à former un jet vers la première extrémité de bobine (11c).

2. Machine rotative selon la revendication 1, comprenant en outre un second support (15) qui recouvre l'autre côté dans la direction axiale du châssis (13), dans laquelle
la bobine (11b) comporte une seconde extrémité de bobine (11b) qui fait saillie de l'autre côté dans la direction axiale du noyau de stator (11a),
le premier passage d'écoulement (17) pénètre à partir de la première ouverture (17a) jusqu'à une seconde ouverture (17b) de l'autre côté dans la direction axiale,
soit l'un ou l'autre parmi la carcasse (13) et le second support (15), soit les deux, comportent un cinquième passage d'écoulement (19a,b) sur une surface d'appariement entre la carcasse (13) et le second support (15), le cinquième passage d'écoulement (19a,b) étant relié à la première ouverture (17a) et situé du côté extérieur dans la direction radiale de la seconde extrémité de bobine (11b), et
le cinquième passage d'écoulement (19a,b) comporte un sixième passage d'écoulement (19a) et un septième passage d'écoulement (19b), le sixième passage d'écoulement (19a) étant disposé sur la direction circonférentielle, le septième passage d'écoulement (19b) étant disposé à une pluralité d'endroits dans la direction circonférentielle comportant au moins un côté inférieur dans la direction verticale de la seconde extrémité de bobine (11b), étant relié au sixième passage d'écoulement (19a) et pénétrant vers la seconde extrémité de bobine (11d), et le septième passage d'écoulement (19b) est un passage d'écoulement pour amener le milieu de refroidissement qui s'est écoulé à partir de l'entrée (16) à former un jet vers la seconde extrémité de bobine (11d).

3. Machine rotative selon la revendication 2, dans laquelle
le deuxième passage d'écoulement (18a,b) est formé par une première gorge évidée de l'autre côté dans la direction axiale prévue sur une surface de la carcasse (13) dirigée vers le premier support (14), et une surface du premier support (14) dirigée vers la première gorge, et
le cinquième passage d'écoulement (19a,b) est formé par une seconde gorge évidée du côté dans la direction axiale agencée sur une surface de la carcasse (13) dirigée vers le second support (15), et une surface du second support (15) dirigée vers la seconde gorge.

4. Machine rotative selon la revendication 2 ou 3, dans laquelle
la première ouverture (17a) est située sur un côté supérieur dans la direction verticale de la première extrémité de bobine (11c), et
la seconde ouverture (17b) est située sur un côté supérieur dans la direction verticale de la seconde extrémité de bobine (11b).
